(19) Europäisches Patentamt
European Patent Office
Office européen des brevets

(11) **EP 1 929 783 B1**

(12) **EUROPEAN PATENT SPECIFICATION**

(45) Date of publication and mention
of the grant of the patent:
**21.06.2017 Bulletin 2017/25**

(51) Int Cl.:
**H04N 7/24** *(2011.01)*  **H04N 19/00** *(2014.01)*

(21) Application number: **06798996.2**

(22) Date of filing: **29.09.2006**

(86) International application number:
**PCT/KR2006/003913**

(87) International publication number:
**WO 2007/037645 (05.04.2007 Gazette 2007/14)**

(54) **METHOD AND APPARATUS FOR ENCODING A MULTI-VIEW PICTURE USING DISPARITY VECTORS, AND COMPUTER READABLE RECORDING MEDIUM STORING A PROGRAM FOR EXECUTING THE METHOD**

VERFAHREN UND VORRICHTUNG ZUR KODIERUNG EINES BEWEGLICHEN BILDES MIT MEHRFACHANSICHT SOWIE COMPUTERLESBARES AUFZEICHNUNGSMEDIUM MIT PROGRAMM ZUR DURCHFÜHRUNG DES VERFAHRENS

PROCEDE ET APPAREIL DE CODAGE D'UNE IMAGE MULTIVUE AU MOYEN DES VECTEURS DE DISPARITE, ET SUPPORT D'ENREGISTREMENT LISIBLE PAR ORDINATEUR ASSURANT LE STOCKAGE D'UN PROGRAMME POUR L'EXECUTION DE CE PROCEDE

(84) Designated Contracting States:
**DE FR GB**

(30) Priority: **29.09.2005 US 721578 P**
**12.04.2006 KR 20060033209**

(43) Date of publication of application:
**11.06.2008 Bulletin 2008/24**

(73) Proprietor: **Samsung Electronics Co., Ltd.**
**Suwon-si, Gyeonggi-do, 443-742 (KR)**

(72) Inventor: **HA, Tae-Hyeun**
**Gyeonggi-do 441-740 (KR)**

(74) Representative: **Appleyard Lees IP LLP**
**15 Clare Road**
**Halifax HX1 2HY (GB)**

(56) References cited:
**WO-A1-2007/035042   WO-A1-2007/035054**
**US-A- 6 055 012        US-A- 6 144 701**
**US-A1- 2003 202 592   US-A1- 2005 185 048**
**US-A1- 2005 185 048**

- KIMATA H ET AL: "On direct mode for MVC anchors", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. JVT-U134, 22 October 2006 (2006-10-22) , XP030006780,
- JEONG-HYU YANG: "Results on CE2 in Multiview Video Coding", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. M13621, 12 July 2006 (2006-07-12), XP030042290,
- GANG ZHU ET AL: "Inter-view Symmetric Mode in MVC", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. M13174, 30 March 2006 (2006-03-30), XP030041843,
- GANG ZHU ET AL: "Inter-view Direct Mode in MVC", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. M13177, 30 March 2006 (2006-03-30), XP030041846,
- ZHUGANG: "CE4 Report", 29 March 2006 (2006-03-29), ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. M13212, XP030042270, * the whole document *

**(Cont. next page)**

- "Survey of Algorithms used for Multi-view Video Coding (MVC)", 21 January 2005 (2005-01-21), ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, XP030013629, * the whole document *
- YUNG-LYUL LEE ET AL: "Multi-view video coding using 2D direct mode", ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. M11266, 13 October 2004 (2004-10-13), XP030040040,
- YUNG-LYUL LEE ET AL: "Multi-view video coding using illumination change-adaptive motion estimation/motion compensation and 2D direct mode", 12 January 2005 (2005-01-12), ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, XP030040333, * the whole document *
- "TEXT OF COMMITTEE DRAFT OF JOINT VIDEO SPECIFICATION (ITU-T REC. H-264 ISO/IEC 14496-10 AVC) MPEG02/N4810", ISO/IEC JTC1/SC29/WG11, XX, XX, vol. MPEG02, no. N4810, 1 May 2002 (2002-05-01), pages 104-105, XP002442280,
- OHM J-R: "STEREO/MULTIVIEW VIDEO ENCODING USING THE MPEG FAMILY OF STANDARDS", PROCEEDINGS OF SPIE, SPIE, USA, vol. 3639, 25 January 1999 (1999-01-25), pages 242-255, XP008022007, ISSN: 0277-786X, DOI: DOI:10.1117/12.349385
- RU-SHANG WANG ET AL: "Multiview Video Sequence Analysis, Compression, and Virtual Viewpoint Synthesis", IEEE TRANSACTIONS ON CIRCUITS AND SYSTEMS FOR VIDEO TECHNOLOGY, IEEE SERVICE CENTER, PISCATAWAY, NJ, US, vol. 10, no. 3, 1 April 2000 (2000-04-01), XP011014055, ISSN: 1051-8215
- JENS-RAINER OHM ET AL: "An Object-Based System for Stereoscopic Viewpoint Synthesis", IEEE TRANSACTIONS ON CIRCUITS AND SYSTEMS FOR VIDEO TECHNOLOGY, IEEE SERVICE CENTER, PISCATAWAY, NJ, US, vol. 7, no. 5, 1 October 1997 (1997-10-01) , XP011014423, ISSN: 1051-8215
- YI DING ET AL: "Direct Virtual Viewpoint Synthesis from Multiple Viewpoints", IMAGE PROCESSING,2005. ICIP 2005,, vol. 1, 11 September 2005 (2005-09-11), pages 1045-1048, XP010851001, ISBN: 978-0-7803-9134-5
- CHEN S E ET AL: "VIEW INTERPOLATION FOR IMAGE SYNTHESIS", COMPUTER GRAPHICS PROCEEDINGS, PROCEEDINGS OF SIGGRAPH ANNUALINTERNATIONAL CONFERENCE ON COMPUTER GRAPHICS AND INTERACTIVETECHNIQUES, XX, XX, 1 January 1993 (1993-01-01), pages 1-07, XP002913618,

**Description**

**Technical Field**

The present invention relates to a multi-view picture encoding and decoding apparatus, and more particularly, to a disparity vector estimation method of quickly encoding a multi-view picture and improving the compressibility of the multi-view moving picture, and an apparatus for encoding and decoding a multi-view picture using the disparity vector estimation method.

**Background Art**

Recently, a new H.264 picture coding video coding standard for high encoding efficiency compared to conventional standards has been developed. The new H.264 picture coding standard depends on various characteristics, consideration of a variable block size between 16x16 and 4x4, a quadtree structure for motion compensation using a loop de-blocking filter, a multi-reference frame, intra prediction, and context adaptability entropy coding, as well as consideration of general bi-directional (B) estimation slices. Unlike the MPEG-2 standard, the MPEG-4 Part 2 standard, etc., the B slices can be referred to as different slices while using multi-prediction obtained from the same direction (forward or backward). However, the above-described characteristics require many bits for encoding motion information including an estimation mode and motion vector and/or reference image.

In order to overcome this problem, a skip mode and a direct mode can be respectively introduced into predicted (P) slices and B slices. The skip and direct modes allow motion estimation of an arbitrary block of a picture to be currently encoded, using motion vector information previously encoded. Accordingly, additional motion data for blocks or macroblocks (MBs) is not encoded. Motions for these modes are obtained using spatial (skip) or temporal (direct) correlation of motions of adjacent MBs or pictures.

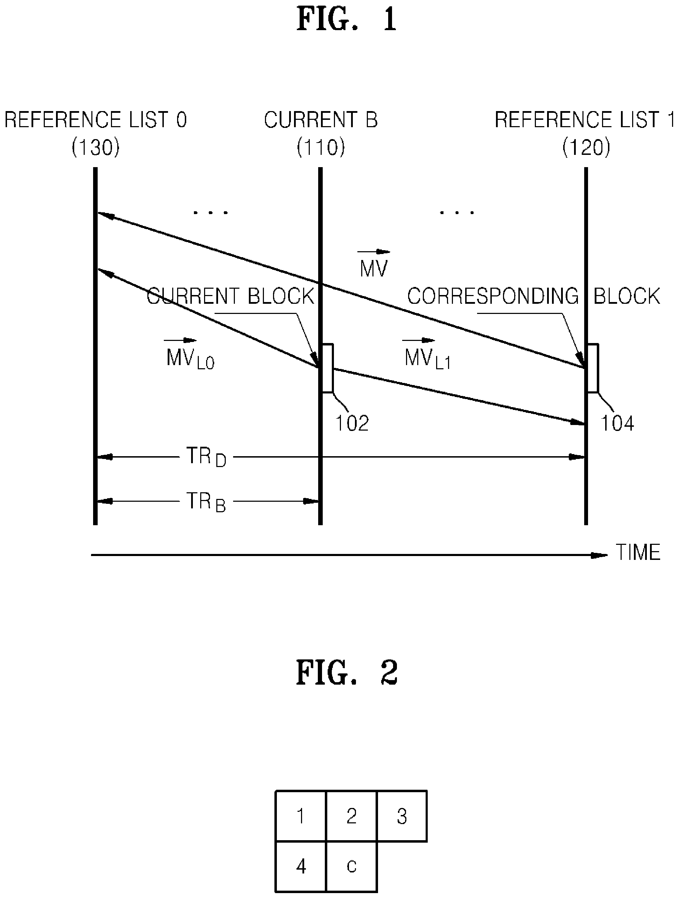

FIG. 1 is a view for explaining a direct mode of a B picture.

In the direct mode, a forward motion vector and a backward motion vector are obtained using a motion vector of a co-located block of a temporally following P image, when estimating a motion of an arbitrary block of a B picture to be currently encoded.

In order to calculate a forward motion vector $MV_{LO}$ and a backward motion vector $MV_{L1}$ of a direct mode block 102 whose motion will be estimated in a B picture 110, a motion vector MV for a reference list 0 image 130 is detected. A motion vector refers to the reference list 0 image 130 which a co-located block 104 of a temporally following picture vector. The co-located block 104 is at the same position as the direct mode block 102 in a current B. Thus, the forward motion vector MV and the backward motion vector $MV_{L1}$ of the direct mode block 102 of the B picture 110 are calculated using Equations 1 and 2 as follows.

$$\overrightarrow{MV_{L0}} = \frac{TR_B}{TR_D} \times \overrightarrow{MV}$$

(1)

$$\overrightarrow{MV_{L1}} = \frac{(TR_B - TR_D)}{TR_D} \times \overrightarrow{MV}$$

(2)

where MV represents the motion vector of the co-located block 104 of the reference list 1 picture 120, $TR_D$ represents a distance between the reference list 0 picture 130 and the reference list 1 picture 120, and $TR_B$ represents a distance between the B picture 110 and the reference list 0 picture 130.

FIG. 2 is a view for explaining a method of estimating a motion vector in a spatial area.

According to the H.264 standard used for encoding moving motion picture data, a frame is divided into blocks, each having a predetermined size, and motion searching for a most similar block to an adjacent frame(s) subjected to encoding is performed. That is, an intermediate value of motion vectors of a left macroblock 4, an upper middle macroblock 2, and an upper right macroblock 3 of a current macroblock c is determined as an estimation value of the corresponding motion vector. The motion vector estimation can be expressed by Equation 3 as follows.

$$\begin{cases} pmvx = MEDIAN(mvx2, mvx3, mvx4) \\ pmvy = MEDIAN(mvy2, mvy3, mvy4) \end{cases}$$

(3)

As such, a method of encoding a moving picture using spatial correlation as well temporal correlation has been proposed. However, a method of enhancing the compressibility and processing speed of a multi-view picture having significantly more information than a general moving motion picture, is still required.

ZHUGANG: "CE4 Report", 29 March 2006 (2006-03-29), ITU Study Group 16 - Video Coding Experts Groups-ISO/IEC MPEG & ITU-T VCEG (ISO/IEC JTC1/SC29/WG11 and ITU-T SG16 Q6), XX, XX, No. M13212, XP030042270 discloses a multi-view inter-view direct mode.

"Survey of Algorithms used for Multi-view Video Coding (MVC)", 21 January 2005 (2005-01-21), ITU Study Group 16 - VIDEO CODING EXPERTS GROUP -ISO/IEC MPEG & ITU-T VCEG (ISO/IEC JTC1/SC29/WG11 and ITU-T SG16 Q6), XX, XX, XP030013629), discloses disparity/motion vector prediction using predictive vectors in multi-view video coding.

YUNG-LYUL LEE et al: "Multi-view video coding using 2D direct mode", ITU Study Group 16 - VIDEO CODING EXPERTS GROUP -ISO/IEC MPEG & ITU-T VCEG (ISO/IEC JTC1/SC29/WG11 and ITU-T SG16 Q6), XX, XX, No. M11266, 13 October 2004 (2004-10-13), XP030040040 discloses multi-view video coding using illumination change-adaptive motion estimation/motion compensation 2D direct mode.

YUNG-LYUL LEE et al: "Multi-view video coding using illumination change-adaptive motion estimation/motion compensation and 2D direct mode", 12 January 2005 (2005-01-12), ITU Study Group 16, VIDEO CODING EXPERTS GROUP -ISO/IEC MPEG & ITU-T VCEG (ISO/IEC JTC1/SC29/WG11 and ITU-T SG16 Q6), XX, XX, XP030040333, discloses multi-view video coding using 2D direct mode.

US 2005/185048 discloses a method, system, and an apparatus for reconstructing intermediate video using symmetric disparity estimation. A virtual video area is set in an intermediate-view of a left image and a right image, and the virtual video is divided into predetermined block units. A left disparity vector and a right disparity vector are estimated by moving blocks of the left image and right image on a pixel-by-pixel basis symmetrically with respect to reference coordinates of an arbitrary block among the divided block units, and intermediate-view video with pixel values of a left image and a right image are formed from the estimated left disparity vector and right disparity vector.

**Disclosure of Invention**

**Technical Solution**

The present invention provides a method and apparatus for encoding a multi-view picture, in order to enhance the compressibility of a multi-view picture and quickly perform encoding of the multi-view picture by estimating disparity using camera parameters.

**Advantageous Effects**

According to the present invention, a disparity vector estimation method can enhance the compressibility of a multi-view picture and quickly perform encoding of the multi-view picture using camera parameters, in particular, translation parameters.

The present invention provides multi-view picture encoding schemes using the disparity vector estimation method that uses camera parameters.

**Description of Drawings**

The above and other aspects of the present invention will become more apparent by describing in detail exemplary embodiments thereof with reference to the attached drawings in which:

FIG. 1 is a view for explaining a direct mode of a B picture;
FIG. 2 is a view for explaining a method of estimating a motion vector in a spatial area;
FIG. 3 is a block diagram of a multi-view moving picture encoding apparatus according to an exemplary embodiment of the present invention;
FIG. 4 illustrates a corresponding point in three multi-view pictures photographed by a camera setup according to an exemplary embodiment of the present invention;

FIG. 5 illustrates one corresponding point in three multi-view pictures photographed in a pure-translation camera setup according to an exemplary embodiment of the present invention;

FIG. 6A illustrates three adjacent pictures photographed by three multi-view cameras;

FIG. 6B illustrates two pictures obtained by overlapping the three adjacent pictures illustrated in FIG. 6A;

FIG. 7 is a graph illustrating correlations between corresponding points according to distances between multi-view cameras according to an exemplary embodiment of the present invention;

FIG. 8 is a graph illustrating a method of searching for a corresponding point according to an exemplary embodiment of the present invention;

FIG. 9 is a flowchart illustrating a disparity vector estimation method using a spatial direct mode according to an exemplary embodiment of the present invention;

FIG. 10 is a block diagram of a multi-view picture encoding apparatus that performs spatial direct mode estimation according to an exemplary embodiment of the present invention; and

FIG. 11 is a block diagram of a multi-view picture decoding apparatus that performs the spatial direct mode estimation according to an exemplary embodiment of the present invention.

## Best Mode

The invention is defined in the appended claims, with particular embodiments defined in dependent claims.

## Mode for Invention

Hereinafter, exemplary embodiments of the present invention will be described in detail with reference to the appended drawings.

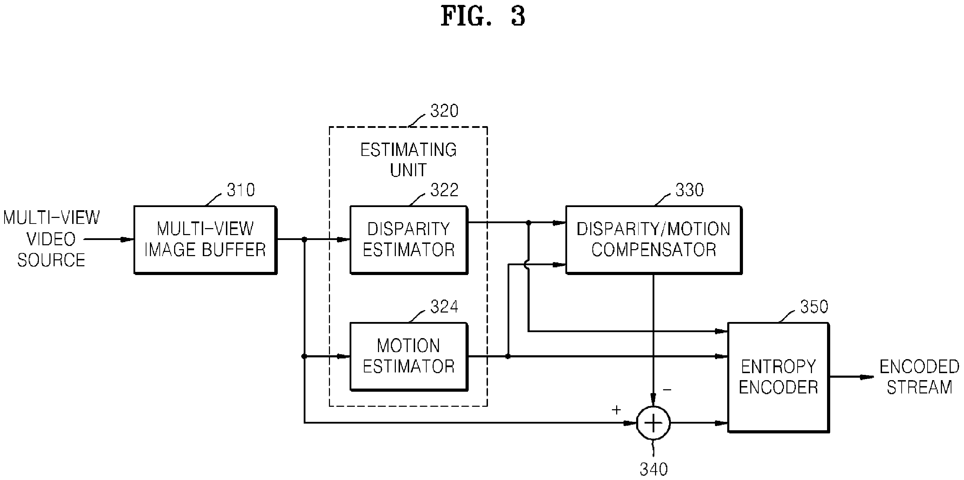

FIG. 3 is a block diagram of a multi-view moving picture encoding apparatus according to an exemplary embodiment of the present invention.

Referring to FIG. 3, the multi-view moving picture encoding apparatus includes a multi-view image buffer 310, an estimating unit 320, a disparity/motion compensator 330, a residual image encoder 340, and an entropy encoder 350.

The multi-view moving picture encoding apparatus receives multi-view image sources obtained from a plurality of camera systems or using a different method. The received multi-view picture sources are stored in the multi-view image buffer 310. The multi-view image buffer 310 provides the stored multi-view picture source data to the estimating unit 320 and the residual image encoder 340.

The estimating unit 320 includes a disparity estimator 322 and a motion estimator 324, and performs disparity estimation and motion estimation on the stored multi-view image sources.

The disparity/motion compensator 330 performs disparity and motion compensation using disparity vectors and motion vectors estimated by the disparity estimator 322 and the motion estimator 324. The disparity/motion compensator 330 reconstructs an image obtained using the estimated motion and disparity vectors and provides the reconstructed image to the residual image encoder 340.

The residual image encoder 340 encodes a residual image obtained by subtracting the image compensated and reconstructed by the disparity/motion compensator 330 from the original image provided by the multi-view image buffer 310 and provides the encoded residual image to the entropy encoder 350.

The entropy encoder 350 receives the estimated the disparity vectors and the motion vectors generated by the estimating unit 320 and the encoded residual image from the residual image encoder 340, and generates a bitstream for the multi-view video source data.

In the disparity estimator 322 illustrated in FIG. 3, disparity information is used for disparity compensation in the same way as motion information for motion estimation and motion compensation is used for conventional codecs such as the H.264 and MPEG 2/4 standards. Similar to an attempt for reducing motion information and increasing encoding efficiency in the H.264 standard, an attempt for reducing disparity information and increasing encoding efficiency in multi-view video coding (MVC) must be made.

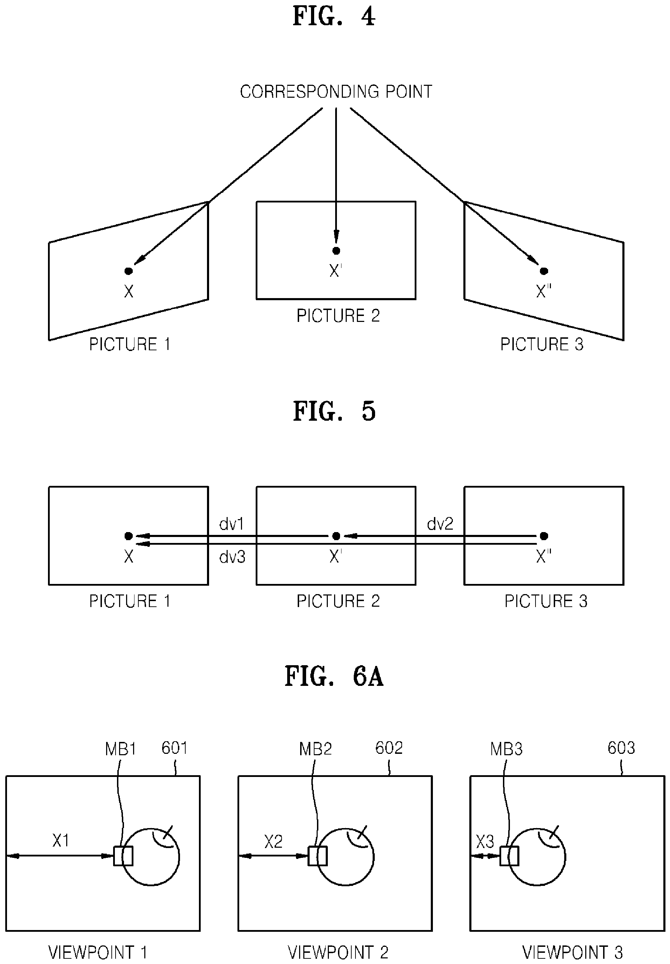

FIG. 4 illustrates a corresponding point in three multi-view pictures photographed by a camera setup according to an exemplary embodiment of the present invention. Referring to FIG. 4, when the corresponding point is photographed by three multi-view cameras, the corresponding point is expressed as X in picture 1, as X' in picture 2, and as X" in picture 3.

The description of FIG. 4 will be made based on the assumption that $X=(x, y, 1)^T$ is the location of a picture point X in a certain pixel in a 3D space of an X-Y-Z coordinate system in picture 1. x and y denote normalized values of x and y coordinates, respectively, of an x-y plane using the value with respect to a Z axis. The corresponding points X' and X" of pictures 2 and 3, respectively, are expressed as Equations 4 and 5.

$$X' = K'R_{12}K^{-1}X + K't_{12}/Z$$

$$(4)$$

$$X'' = K''R_{13}K^{-1}X + K''t_{13}/Z$$

$$(5)$$

wherein K, K', and K" denote camera intrinsic parameters of pictures 1, 2, and 3, respectively, $R_{12}$ and $R_{13}$ denote camera rotation parameters of pictures 2 and 3, respectively, with respect to picture 1, $t_{12}$ and $t_{13}$ denote camera translation parameters of pictures 2 and 3, respectively, with respect to picture 1, and Z denotes a value of a certain point with respect to the Z coordinates.

FIG. 5 illustrates one corresponding point in multi-view pictures photographed in a pure-translation camera setup according to an exemplary embodiment of the present invention.

Pictures photographed by the three multi-view cameras in the pure-translation camera setup, i.e., the three multi-view cameras having the same unique camera characteristics are arranged in parallel to a certain object, are illustrated in FIG. 5. In this case, R=I (in a unit matrix), and K=K'=K" in Equations 4 and 5.

Referring to FIG. 5, X' and X" are points corresponding to X in picture 1. In the pure-translation camera setup, a difference in locations of the points X and X' corresponds to a disparity vector dvl between the points X and X', a difference in locations of the points X' and X' corresponds to a disparity vector dv2 between the points X' and X", and a difference in locations of the points X and X" corresponds to a disparity vector dv3 between the points X and X". In the pure-translation camera setup, correlations between the points X, X', and X" can be expressed by Equations 6, 7, and 8.

$$X' = X + Kt_{12}/Z$$

$$(6)$$

$$X'' = X + Kt_{13}/Z$$

$$(7)$$

$$X'' = X' + Kt_{23}/Z$$

$$(8)$$

Equation 9 can be derived from Equations 6 and 7.

$$X'-X = \frac{t_{12}}{t_{13}}(X''-X)$$

$$(9)$$

When values of $t_{12}$, $t_{13}$, and X"-X, i.e., dv3 are known, a value X'-X, i.e., dv1, can be obtained using Equation 9 instead of a conventional disparity vector search method.

Equation 10 can be derived from Equations 6 and 8.

$$X''\text{-}X' = \frac{t_{23}}{t_{12}} (X'\text{-}X)$$

(10)

When values of $t_{12}$, $t_{23}$, and X'-X, i.e., dv1 are known, a value X"-X', i.e., dv2, can be obtained using Equation 10 instead of a conventional disparity vector search method.

Consequently, when the pure-translation exists and values of camera translation parameters are known in the multi-view camera setup, a disparity vector between the point X' of a current encoding frame and the corresponding point X" of a first reference frame can be estimated using a disparity vector between the point X' of the current encoding frame and the corresponding point X of a second reference frame.

A multi-view camera can be setup in a manner different from the pure-translation multi-view camera setup. However, although the multi-view camera setup in a manner other than the pure-translation multi-view camera setup photographs a multi-view picture, the multi-view camera has the same condition as the pure-translation multi- view camera setup in terms of performing a rectification process so as to encode the multi-view picture as a pre-process or post-process. Therefore, since it is possible to estimate the disparity vector in the pure-translation multi-view camera setup, it is necessary to encode the multi-view picture using camera parameters corresponding to translations.

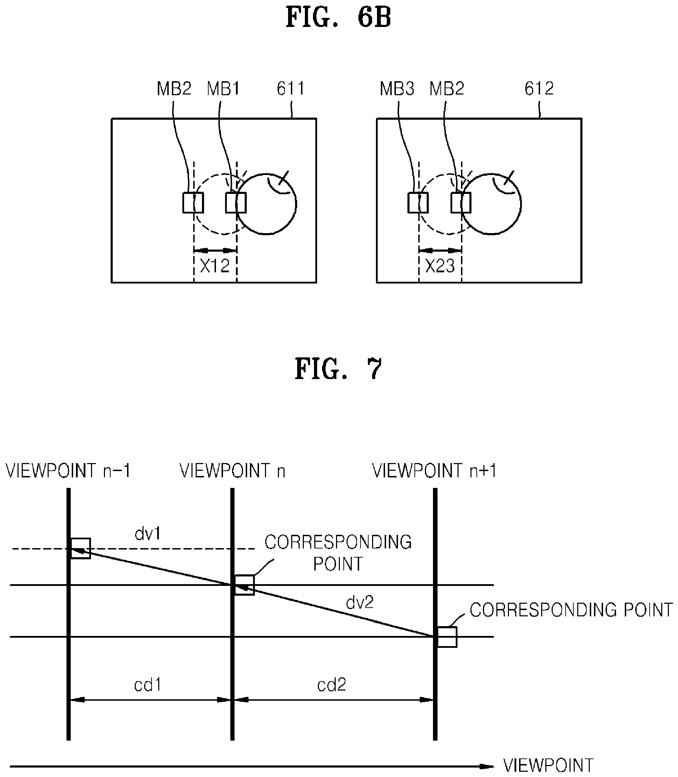

FIG. 6A illustrates three adjacent pictures photographed by three multi-view cameras, and FIG. 6B illustrates two pictures obtained by overlapping the three adjacent pictures illustrated in FIG. 6A.

Referring to FIG. 6A, in the three multi-view cameras, a picture 601 is photographed by a left multi-view camera at a first viewpoint, a picture 602 is photographed by a middle multi-view camera at a second viewpoint, and a picture 603 is photographed by a right multi-view camera at a third viewpoint. X1 denotes a distance between a left side and a certain block MB1 of the picture 601 at the first viewpoint. X2 denotes a distance between a left side and a block MB2 of the picture 602 at the second viewpoint and the block MB2 corresponds to the certain block MB1 of the picture 601. X3 denotes a distance between a left side and a block MB3 of the picture 603 at the third viewpoint and the block MB3 corresponds to the certain block MB1 of the picture 601.

Referring to FIG. 6B, a picture 611 is obtained by overlapping the picture 601 at the first viewpoint and the picture 602 at the second viewpoint, and a picture 612 is obtained by overlapping the picture 602 at the second viewpoint and the picture 603 at the third viewpoint. X12 of the picture 611 denotes a disparity between the block MB1 of the picture 601 at the first viewpoint and the block MB2 of the picture 602 at the second viewpoint, and X23 of the picture 612 denotes a disparity between the block MB2 of the picture 602 at the second viewpoint and the block MB3 of the picture 603 at the third viewpoint. That is, X12=X1-X2, and X23=X2-X3. When the three multi- view cameras are arranged in parallel equally spaced apart, the disparities X12 and X23 are identical to each other. Such a case is generalized as illustrated in FIG. 7.

FIG. 7 is a graph illustrating correlations between corresponding points according to distances between multi-view cameras according to an exemplary embodiment of the present invention. Referring to FIG. 7, cd1 denotes a distance of multi-view cameras between two viewpoints n-1 and n, and cd2 denotes a distance of multi-view cameras between two viewpoints n and n+1. dv1 denotes a disparity vector of a certain corresponding block or point between the two viewpoints n-1 and n, and dv2 denotes a disparity vector of a certain corresponding block or point between the two viewpoints n and n+1.

When dv1 and dv2 are in a rectilinear line, Equation 11 is obtained.

$$dv2 = dv1 \text{ x } cd2 / cd1 \quad (11)$$

Therefore, when dv1, cd1, and cd2 are previously known or estimated, dv2 can be calculated using dv1, cd1, and cd2 instead of the conventional estimation method. Furthermore, FIG. 7 and Equation 11 show that if cd1=cd2 then dv2=dv1. A value of cd2/cd1 corresponds to a translation parameter.

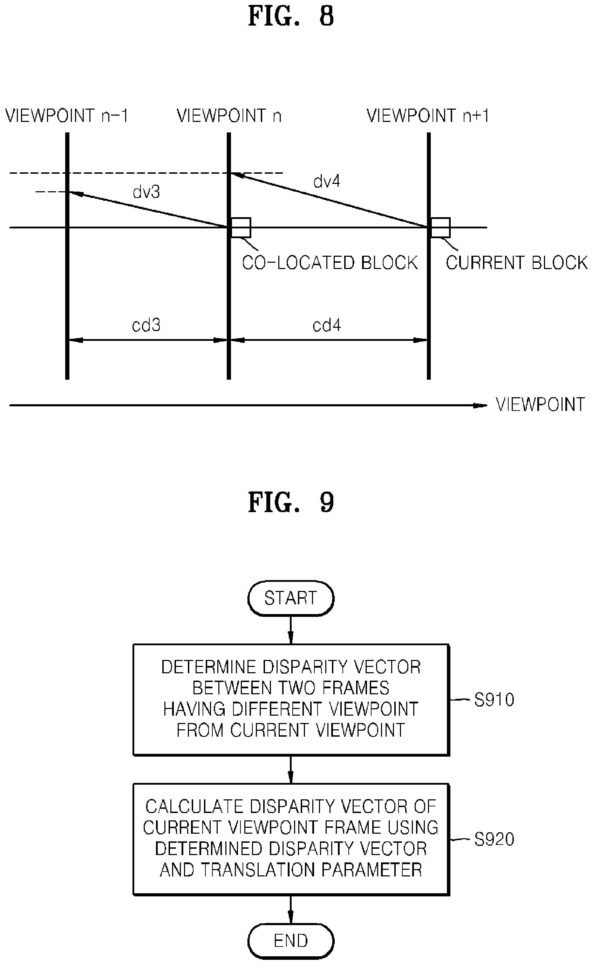

FIG. 8 is a graph illustrating a method of searching for a corresponding point according to an exemplary embodiment of the present invention.

As described with reference to FIG. 7, it is difficult to search for a corresponding block or point whose disparity vector can be calculated using Equation 8. However, blocks adjacent to a current block to be estimated have a similar disparity vector to that of the current block, so that the graph illustrated in FIG. 7 can be modified to that illustrated in FIG. 8.

Referring to FIG. 8, cd3 denotes a distance of multi-view cameras between two viewpoints n-1 and n, cd4 denotes a distance of multi-view cameras between two viewpoints n and n+1, dv3 denotes a disparity vector of a certain corresponding block or point between the two viewpoints n-1 and n, and dv4 denotes a disparity vector of the current block between the viewpoints n and n+1.

In the current exemplary embodiment of the present invention, dv4 can be estimated using the disparity vector dv3 between a co-located block of the current block at the viewpoint n and a corresponding block at the viewpoint n-1 of the co-located block at the viewpoint n. Therefore, the disparity vector of the current block can be calculated by using Equation 12, which is similar to Equation 11.

$$dv4 = dv3 \text{ x } cd4 \text{ / } cd3 \text{ (12)}$$

A value of cd4/cd3 corresponds to a translation parameter. The correlations between disparity vectors of pictures at the viewpoints n-1, n, and n+1 have been described with reference to FIGS. 7 and 8. However, Equations 11 and 12 can be used not only in adjacent pictures but also in pictures spaced apart from each other by a certain gap. In the current exemplary embodiment of the present invention, the disparity vector estimation method is referred to as a spatial direct mode estimation.

FIG. 9 is a flowchart illustrating a disparity vector estimation method using spatial direct mode estimation according to an exemplary embodiment of the present invention. Referring to FIG. 9, a disparity vector between two frames having different viewpoints from a current viewpoint is determined (Operation 910). A disparity vector of a current viewpoint frame is calculated using the determined disparity vector and a certain translation parameter (Operation 920).

More specifically, for example, when the two frames having different viewpoints from a current viewpoint are first and second viewpoint frames, and the disparity vector of the current viewpoint frame is dv2, dv2 is calculated using Equation 11, i.e., dv2 = dv1 X cd2 / cd1. dv1 denotes the disparity vector between the two frames, i.e., a certain block of the first viewpoint frame and a first block of the second viewpoint frame corresponding to the certain block. dv2 denotes a disparity vector between the first block of the second viewpoint frame and a second block of the current viewpoint frame corresponding to the first block. Also, as described above, cd1 denotes a distance between two cameras photographing the first viewpoint frame and the second viewpoint frame, respectively, cd2 denotes a distance between two cameras photographing the second viewpoint frame and the current viewpoint frame, respectively, and cd2/cd1 is a value corresponding to the translation parameter.

Based on the fact that blocks adjacent to the current block to be estimated have a similar disparity vector to the current block, the disparity vector estimation method of the current exemplary embodiment can be used when two frames having different viewpoints from a current viewpoint are first and second viewpoint frames, and the disparity vector of a current viewpoint frame is dv4 which can be calculated using Equation 12, i.e., dv4 = dv3 X cd4 / cd3.

dv3 denotes the disparity vector between the two frames, i.e., a certain block of the first viewpoint frame and a first block of the second viewpoint frame corresponding to the certain block. dv4 denotes a disparity vector of the second viewpoint frame of a co-located second block of the current viewpoint frame of the first block. A second block is the co-located block of the first block in the current viewpoint frame and is the current block as depicted in Figure 8. Thus, dv4 denotes a disparity vector of the co-located second block of the first block between the second viewpoint frame and the current viewpoint frame. Also, as described above, cd3 denotes a distance between two cameras photographing the first viewpoint frame and the second viewpoint frame, respectively, cd4 denotes a distance between two cameras photographing the second viewpoint frame and the current viewpoint frame, respectively, and cd4/cd3 is a value corresponding to the translation parameter.

In the current exemplary embodiment, the first viewpoint frame, second viewpoint frame, and the current viewpoint frame are images photographed by a first camera, a second camera, and a third camera, respectively, which are sequentially arranged in parallel. The translation parameter is a value relating to the distances between the multi-view cameras such as cd2/cd1 or cd4/cd3 and can be transmitted from a multi-view camera system.

A multi-view picture encoding apparatus and a multi-view picture decoding apparatus separately perform the spatial direct mode estimation of the current exemplary embodiment. When the multi-view picture encoding apparatus uses the spatial direct mode estimation, all disparity vectors need not to be encoded in the multi-view picture encoding apparatus. Also, the multi-view picture decoding apparatus can determine a disparity vector using the disparity vector estimation method according to the spatial direct mode estimation, so that multi-view picture encoding and decoding can be effectively performed.

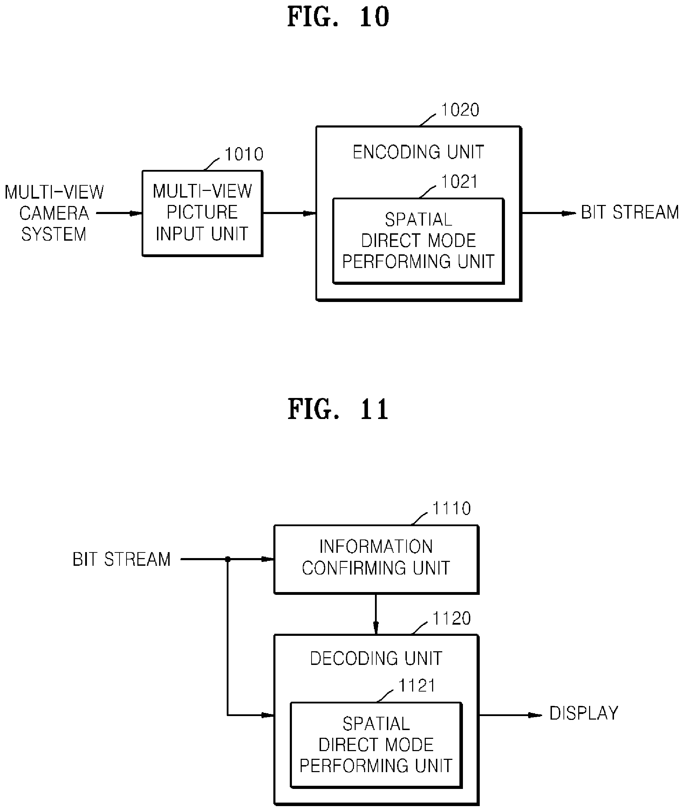

FIG. 10 is a block diagram of a multi-view picture encoding apparatus that performs the spatial direct mode estimation according to an exemplary embodiment of the present invention.

Referring to FIG. 10, the multi-view picture encoding apparatus that receives at least three multi-view pictures and encodes the multi-view pictures comprises a multi-view picture input unit 1010 and an encoding unit 1020.

The multi-view picture input unit 1010 receives the three multi-view pictures and a certain camera parameter from a multi-view camera system including a plurality of cameras. The encoding unit 1020 generates an encoded multi-view picture bit stream including the multi-view pictures and the certain camera parameter.

The encoding unit 1020 comprises a spatial direct mode performing unit 1021 for performing the spatial direct mode estimation when estimating a disparity vector. When the certain camera parameter is a translation parameter, the spatial direct mode performing unit 1021 estimates the disparity vector using the spatial direct mode estimation that calculates a disparity vector of a current viewpoint frame using a disparity vector of two frames having a different viewpoint from a current viewpoint and the translation parameter.

The operation of the spatial direct mode performing unit 1021 is described with reference to FIG. 9. The spatial direct mode performing unit 1021 can calculate the disparity vector using Equation 11 or 12.

The encoding unit 1020 sets information indicating the disparity vector estimation method used to encode the three multi-view pictures and transmits the multi-view picture bit stream. When the encoding unit 1020 encodes the multi-view pictures using the same value as the transmitted translation parameter, the encoding unit 1020 further sets information indicating that a translation matrix does not change and transmits the multi-view picture bit stream. Therefore, the multi-view picture encoding apparatus of the present invention does not need to transmit the previously transmitted translation parameter again, which increases multi-view picture encoding efficiency. The information indicating the disparity vector estimation method or the information indicating that the translation matrix does not change can be set as flag information included in the multi-view picture bit stream.

The multi-view picture encoding apparatus of the present invention can perform a conventional multi-view picture encoding method and the multi-view picture encoding method performing the spatial direct mode estimation, selects one of them having high multi-view picture encoding efficiency, and encodes the multi-view pictures.

FIG. 11 is a block diagram of a multi-view picture decoding apparatus that performs the spatial direct mode estimation according to an exemplary embodiment of the present invention.

Referring to FIG. 11, the multi-view picture decoding apparatus comprises an information confirming unit 1110 and a decoding unit 1120. The information confirming unit 1110 receives an encoded multi-view picture bit stream and confirms information indicating a disparity vector estimation method included in the received multi-view picture bit stream. The decoding unit 1120 decodes the encoded multi-view picture based on the confirmed information.

The decoding unit 1120 comprises a spatial direct mode performing unit 1121 to perform the spatial direct mode estimation and determine a disparity vector. When the confirmed information about the disparity vector estimation method is the spatial direct mode estimation, the spatial direct mode performing unit 1121 calculates a disparity vector of a current viewpoint frame using a disparity vector between two frames having a different viewpoint from a current viewpoint and a certain translation parameter and thereby determines a disparity.

The operation of the spatial direct mode performing unit 1121 is described with reference to FIG. 9. The spatial direct mode performing unit 1121 can calculate the disparity vector using Equation 11 or 12.

The translation parameter is a value relating to a distance between multi-view cameras and is transmitted from the multi-view picture encoding apparatus. When the multi-view picture encoding apparatus does not transmit the translation parameter but instead transmits information indicating that a previously received translation parameter does not change, the decoding unit 1120 can decode the multi-view picture using the previously received translation parameter.

The present invention can also be implemented as computer-readable code on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, and carrier waves (such as data transmission through the Internet). The computer-readable recording medium can also be distributed over network-coupled computer systems so that the computer-readable code is stored and executed in a distributed fashion.

According to the present invention, a disparity vector estimation method can enhance the compressibility of a multi-view picture and quickly perform encoding of the multi-view picture using camera parameters, in particular, translation parameters.

The present invention provides multi-view picture encoding and decoding apparatuses using the disparity vector estimation method that uses camera parameters.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method for encoding a multi-view picture from a source of multi-view pictures, said multi-view picture comprising at least three frames, the method comprising:

determining a translation parameter which is a value relating to distances between a plurality of cameras providing multi-view pictures;

determining a disparity vector between two frames, each having a different viewpoint from a current viewpoint of a third viewpoint frame;

calculating a disparity vector of a current viewpoint frame using the disparity vector between said two frames and the translation parameter;

encoding the multi-view picture using the calculated disparity vector; and

transmitting an encoded bit stream containing the multi-view pictures, information on the disparity vector calculation method, and information on the translation parameter;

wherein the two frames having the different viewpoint from the current viewpoint are first and second viewpoint frames, and: either the disparity vector of the current viewpoint frame is dv2 and is calculated as dv2 = dv1 x cd2 / cd1, where dv1 denotes the disparity vector between the two frames and is calculated using a block of the first viewpoint frame and a block of the second viewpoint frame, said blocks corresponding to each other, dv2 denotes a disparity vector of the current viewpoint frame with respect to the second viewpoint frame, dv1 and dv2 are in a rectilinear line, and cd2/cd1 is a value corresponding to the translation parameter, or

the disparity vector of the current viewpoint frame is dv4, and is calculated as dv4 = dv3 x cd4 / cd3, where dv3 denotes the disparity vector between the two frames and is calculated using a block of the first viewpoint frame and a block of the second viewpoint frame, said block corresponding to each other, dv4 denotes a disparity vector with respect to the second viewpoint frame and belonging to a block of the current viewpoint frame co-located with respect to said block of said second viewpoint frame, and cd4/cd3 is a value corresponding to the translation parameter.

2. The method of claim 1, wherein the first viewpoint frame, second viewpoint frame, and the current viewpoint frame are images photographed by a first camera, a second camera, and a third camera, respectively, which are sequentially arranged in parallel.

3. The method of claim 1, wherein the translation parameter is transmitted from a multi-view camera system comprising the plurality of cameras.

4. A multi-view picture encoding apparatus comprising:

a multi-view picture input unit (1010) which receives multi-view pictures and a translation parameter;

an encoding unit (1020) which generates an encoded multi-view picture bit stream including the multi-view pictures, information indicating a disparity vector estimation method, and information on the translation parameter;

wherein the encoding unit (1020) comprises a spatial direct mode performing unit (1021) which estimates a disparity vector using spatial direct mode estimation by calculating a disparity vector of a current viewpoint frame using a disparity vector between two frames, each having a different viewpoint from a current viewpoint of a current viewpoint frame and the translation parameter which is a value relating to distances between a plurality of cameras providing multi-view pictures;

wherein the two frames having the different viewpoint from the current viewpoint are first and second viewpoint frames, and: either the disparity vector of the current viewpoint frame is dv2 and is calculated by the spatial direct mode performing unit (1021) as dv2 = dv1 x cd2 / cd1, where dv1 denotes the disparity vector between the two frames and is calculated using a block of the first viewpoint frame and a block of the second viewpoint frame, said blocks corresponding to each other, dv2 denotes a disparity vector of the current viewpoint frame with respect to the second viewpoint frame, dv1 and dv2 are in a rectilinear line, and cd2/cd1 is a value corresponding to the translation parameter, or

the disparity vector of the current viewpoint frame is dv4, and is calculated by the spatial direct mode performing unit (1021) as dv4 = dv3 x cd4 / cd3, where dv3 denotes the disparity vector between the two frames, and is calculated using a block of the first viewpoint frame and a block of the second viewpoint frame, said blocks corresponding to each other, dv4 denotes a disparity vector with respect to the second viewpoint frame and belonging to a block of the current viewpoint frame co-located with respect to said block of said second viewpoint frame, and cd4/cd3 is a value corresponding to the translation parameter.

5. The apparatus of claim 4, wherein the first viewpoint frame, second viewpoint frame, and the current viewpoint frame are images photographed by a first camera, a second camera, and a third camera, respectively, which are sequentially arranged in parallel.

**6.** The apparatus of claim 4, wherein the translation parameter is transmitted from a multi-view camera system comprising the plurality of cameras.

**7.** The apparatus of claim 4, wherein the encoding unit sets information including a disparity vector estimation method used to encode the multi-view pictures and transmits the multi-view picture bit stream.

**8.** The apparatus of claim 7, wherein when the encoding unit encodes the multi-view pictures using a same value as the transmitted translation parameter, the encoding unit further sets information indicating that a translation matrix does not change and transmits the multi-view picture bit stream.

**9.** A computer-readable recording medium on which a program is recorded for executing the method of claim 1, when said program is executed by a computer.

**Patentansprüche**

**1.** Verfahren zum Codieren eines Mehrfachansichtbilds von einer Quelle von Mehrfachansichtbildern, wobei das Mehrfachansichtbild mindestens drei Rahmen umfasst, das Verfahren umfassend:

Bestimmen eines Translationsparameters, der ein Wert ist, der zu Distanzen zwischen einer Vielzahl von Kameras, die Mehrfachansichtbilder bereitstellen, in Beziehung steht;
Bestimmen eines Disparitätsvektors zwischen zwei Rahmen, die jeder einen von einem gegenwärtigen Standpunkt eines dritten Standpunktrahmens verschiedenen Standpunkt aufweisen;
Berechnen eines Disparitätsvektors eines gegenwärtigen Standpunktrahmens unter Verwendung des Disparitätsvektors zwischen den zwei Rahmen und des Translationsparameters;
Codieren des Mehrfachansichtbilds unter Verwendung des berechneten Disparitätsvektors; und
Übertragen eines codierten Bitstroms, der die Mehrfachansichtbilder, Informationen über das Disparitätsvektor-Berechnungsverfahren und Informationen über den Translationsparameter enthält;
wobei die zwei Rahmen, die den von dem gegenwärtigen Standpunkt verschiedenen Standpunkt aufweisen, erste und zweite Standpunktrahmen sind, und:

entweder der Disparitätsvektor des gegenwärtigen Standpunktrahmens dv2 ist und als dv2 = dv1 x cd2 / cd1 berechnet wird, wobei dv1 den Disparitätsvektor zwischen den zwei Rahmen bezeichnet und unter Verwendung eines Blocks des ersten Standpunktrahmens und eines Blocks des zweiten Standpunktrahmens berechnet wird, wobei die Blöcke miteinander korrespondieren, dv2 einen Disparitätsvektor des gegenwärtigen Standpunktrahmens in Bezug auf den zweiten Standpunktrahmen bezeichnet, dv1 und dv2 sich in einer geradlinigen Linie befinden und cd2/cd1 ein mit dem Translationsparameter korrespondierender Wert ist, oder
der Disparitätsvektor des gegenwärtigen Standpunktrahmens dv4 ist und als dv4 = dv3 x cd4 / cd3 berechnet wird, wobei dv3 den Disparitätsvektor zwischen den zwei Rahmen bezeichnet und unter Verwendung eines Blocks des ersten Standpunktrahmens und eines Blocks des zweiten Standpunktrahmens berechnet wird, wobei die Blöcke miteinander korrespondieren, dv4 einen Disparitätsvektor in Bezug auf den zweiten Standpunktrahmen bezeichnet und zu einem Block des gegenwärtigen Standpunktrahmens gehört, zusammen angeordnet in Bezug auf den Block des zweiten Standpunktrahmens, und cd4/cd3 ein mit dem Translationsparameter korrespondierender Wert ist.

**2.** Verfahren nach Anspruch 1, wobei der erste Standpunktrahmen, der zweite Standpunktrahmen und der gegenwärtige Standpunktrahmen von einer ersten Kamera, einer zweiten Kamera bzw. einer dritten Kamera, die aufeinanderfolgend parallel angeordnet sind, fotografierte Bilder sind.

**3.** Verfahren nach Anspruch 1, wobei der Translationsparameter von einem Mehrfachansicht-Kamerasystem, das die Vielzahl von Kameras umfasst, übertragen wird.

**4.** Mehrfachansichtbild-Codierungsvorrichtung, umfassend:

eine Mehrfachansichtbild-Eingabeeinheit (1010), die Mehrfachansichtbilder und einen Translationsparameter empfängt;
eine Codierungseinheit (1020), die einen codierten Mehrfachansichtbild-Bitstrom erzeugt, der die Mehrfachansichtbilder, Informationen, die ein Disparitätsvektor-Schätzungsverfahren angeben, und Informationen über den Translationsparameter enthält;

wobei die Codierungseinheit (1020) eine Einheit (1021) zum Durchführen von räumlichem Direktmodus umfasst, die einen Disparitätsvektor unter Verwendung räumlicher Direktmodusschätzung durch Berechnen eines Disparitätsvektors eines gegenwärtigen Standpunktrahmens unter Verwendung eines Disparitätsvektors zwischen zwei Rahmen, die jeweils einen von einem gegenwärtigen Standpunkt eines gegenwärtigen Standpunktrahmens verschiedenen Standpunkt aufweisen, und des Translationsparameters, der ein Wert ist, der zu Distanzen zwischen einer Vielzahl von Kameras, die Mehrfachansichtbilder bereitstellen, in Beziehung steht, schätzt;

wobei die zwei Rahmen, die den von dem gegenwärtigen Standpunkt verschiedenen Standpunkt aufweisen, erste und zweite Standpunktrahmen sind, und:

entweder der Disparitätsvektor des gegenwärtigen Standpunktrahmens dv2 ist und durch die Einheit (1021) zum Durchführen von räumlichem Direktmodus als dv2 = dv1 x cd2 / cd1 berechnet wird, wobei dv1 den Disparitätsvektor zwischen den zwei Rahmen bezeichnet, und unter Verwendung eines Blocks des ersten Standpunktrahmens und eines Blocks des zweiten Standpunktrahmens berechnet wird, wobei die Blöcke miteinander korrespondieren, dv2 einen Disparitätsvektor des gegenwärtigen Standpunktrahmens in Bezug auf den zweiten Standpunktrahmen bezeichnet, dv1 und dv2 sich in einer geradlinigen Linie befinden und cd2/cd1 ein mit dem Translationsparameter korrespondierender Wert ist, oder

der Disparitätsvektor des gegenwärtigen Standpunktrahmens dv4 ist und durch die Einheit (1021) zum Durchführen von räumlichem Direktmodus als dv4 = dv3 x cd4 / cd3 berechnet wird, wobei dv3 den Disparitätsvektor zwischen den zwei Rahmen bezeichnet und unter Verwendung eines Blocks des ersten Standpunktrahmens und eines Blocks des zweiten Standpunktrahmens berechnet wird, wobei die Blöcke miteinander korrespondieren, dv4 einen Disparitätsvektor in Bezug auf den zweiten Standpunktrahmen bezeichnet und zu einem Block des gegenwärtigen Standpunktrahmens gehört, zusammen angeordnet in Bezug auf den Block des zweiten Standpunktrahmens, und cd4/cd3 ein mit dem Translationsparameter korrespondierender Wert ist.

5. Vorrichtung nach Anspruch 4, wobei der erste Standpunktrahmen, der zweite Standpunktrahmen und der gegenwärtige Standpunktrahmen von einer ersten Kamera, einer zweiten Kamera bzw. einer dritten Kamera, die aufeinanderfolgend parallel angeordnet sind, fotografierte Bilder sind.

6. Vorrichtung nach Anspruch 4, wobei der Translationsparameter von einem Mehrfachansicht-Kamerasystem, das die Vielzahl von Kameras umfasst, übertragen wird.

7. Vorrichtung nach Anspruch 4, wobei die Codierungseinheit Informationen setzt, die ein Disparitätsvektor-Schätzungsverfahren enthalten, das zum Codieren der Mehrfachansichtbilder verwendet wird, und den Mehrfachansichtbild-Bitstrom überträgt.

8. Vorrichtung nach Anspruch 7, wobei, wenn die Codierungseinheit die Mehrfachansichtbilder unter Verwendung eines gleichen Werts wie der übertragene Translationsparameter codiert, die Codierungseinheit ferner Informationen setzt, die angeben, dass sich eine Translationsmatrix nicht ändert, und den Mehrfachansichtbild-Bitstrom überträgt.

9. Computerlesbares Aufzeichnungsmedium, auf dem ein Programm zum Ausführen des Verfahrens nach Anspruch 1, wenn das Programm von einem Rechner ausgeführt wird, aufgezeichnet ist.

**Revendications**

1. Procédé pour coder une image multivue provenant d'une source d'images multivues, ladite image multivue comprenant au moins trois trames, le procédé consistant à :

déterminer un paramètre de translation qui est une valeur se rapportant à des distances entre une pluralité d'appareils de prise de vues fournissant des images multivues ;
déterminer un vecteur de disparité entre deux trames ayant chacune un point de vue différent par rapport à un point de vue actuel d'une troisième trame de point de vue ;
calculer un vecteur de disparité d'une trame de point de vue actuel à l'aide du vecteur de disparité entre lesdites deux trames et le paramètre de translation ;
coder l'image multivue à l'aide du vecteur de disparité calculé ; et

transmettre un train de bits codé contenant les images multivues, des informations concernant le procédé de calcul de vecteur de disparité, ainsi que des informations concernant le paramètre de translation ;

dans lequel les deux trames ayant le point de vue différent par rapport au point de vue actuel sont des première et deuxième trames de point de vue et

soit le vecteur de disparité de la trame de point de vue actuel est dv2 et est calculé sous la forme dv2 = dv1 x cd2 / cd1, où dv1 représente le vecteur de disparité entre les deux trames et est calculé à l'aide d'un bloc de la première trame de point de vue et d'un bloc de la deuxième trame de point de vue, lesdits blocs correspondant l'un à l'autre, dv2 représente un vecteur de disparité de la trame de point de vue actuel par rapport à la deuxième trame de point de vue, dv1 et dv2 sont sur une ligne rectiligne et cd2/cd1 est une valeur correspondant au paramètre de translation,

soit le vecteur de disparité de la trame de point de vue actuel est dv4 et est calculé sous la forme dv4 = dv3 x cd4 / cd3, où dv3 représente le vecteur de disparité entre les deux trames et est calculé à l'aide d'un bloc de la première trame de point de vue et d'un bloc de la deuxième trame de point de vue, lesdits blocs correspondant l'un à l'autre, dv4 représente un vecteur de disparité par rapport à la deuxième trame de point de vue et appartenant à un bloc de la trame de point de vue actuel cositué par rapport audit bloc de ladite deuxième trame de point de vue et cd4/cd3 est une valeur correspondant au paramètre de translation.

2. Procédé selon la revendication 1, dans lequel la première trame de point de vue, la deuxième trame de point de vue et la trame de point de vue actuel sont des images photographiées par un premier appareil de prise de vues, un deuxième appareil de prise de vue et un troisième appareil de prise de vues, respectivement, qui sont agencés de façon séquentielle en parallèle.

3. Procédé selon la revendication 1, dans lequel le paramètre de translation est transmis à partir d'un système d'appareil de prise de vues multivue comprenant la pluralité d'appareils de prise de vue.

4. Appareil de codage d'image multivue comprenant :

une unité d'entrée d'image multivue (1010) qui reçoit des images multivues et un paramètre de translation ;

une unité de codage (1020) qui génère un train de bits d'image multivue codé comprenant les images multivues, des informations indiquant un procédé d'estimation de vecteur de disparité, ainsi que des informations concernant le paramètre de translation ;

dans lequel l'unité de codage (1020) comprend une unité de réalisation de mode direct spatial (1021) qui estime un vecteur de disparité à l'aide d'une estimation de mode direct spatial en calculant un vecteur de disparité d'une trame de point de vue actuel à l'aide d'un vecteur de disparité entre deux trames ayant chacune un point de vue différent par rapport à un point de vue actuel d'une trame de point de vue actuel et le paramètre de translation qui est une valeur se rapportant à des distances entre une pluralité d'appareils de prise de vues fournissant des images multivues ;

dans lequel les deux trames ayant le point de vue différent par rapport au point de vue actuel sont des première et deuxième trames de point de vue et

soit le vecteur de disparité de la trame de point de vue actuel est dv2 et est calculé par l'unité de réalisation de mode direct spatial (1021) sous la forme dv2 = dv1 x cd2 / cd1, où dv1 représente le vecteur de disparité entre les deux trames et est calculé à l'aide d'un bloc de la première trame de point de vue et d'un bloc de la deuxième trame de point de vue, lesdits blocs correspondant l'un à l'autre, dv2 représente un vecteur de disparité de la trame de point de vue actuel par rapport à la deuxième trame de point de vue, dv1 et dv2 sont sur une ligne rectiligne et cd2/cd1 est une valeur correspondant au paramètre de translation,

soit le vecteur de disparité de la trame de point de vue actuel est dv4 et est calculé par l'unité de réalisation de mode direct spatial (1021) sous la forme dv4 = dv3 x cd4 / cd3, où dv3 représente le vecteur de disparité entre les deux trames et est calculé à l'aide d'un bloc de la première trame de point de vue et d'un bloc de la deuxième trame de point de vue, lesdits blocs correspondant l'un à l'autre, dv4 représente un vecteur de disparité par rapport à la deuxième trame de point de vue et appartenant à un bloc de la trame de point de vue actuel cositué par rapport audit bloc de ladite deuxième trame de point de vue et cd4/cd3 est une valeur correspondant au paramètre de translation.

5. Appareil selon la revendication 4, dans lequel la première trame de point de vue, la deuxième trame de point de vue et la trame de point de vue actuel sont des images photographiées par un premier appareil de prise de vues, un deuxième appareil de prise de vue et un troisième appareil de prise de vues, respectivement, qui sont agencés de façon séquentielle en parallèle.

**6.** Appareil selon la revendication 4, dans lequel le paramètre de translation est transmis à partir d'un système d'appareil de prise de vues multivue comprenant la pluralité d'appareils de prise de vue.

**7.** Appareil selon la revendication 4, dans lequel l'unité de codage détermine des informations comprenant un procédé d'estimation de vecteur de disparité utilisé pour coder les images multivues et transmet le train de bits d'image multivue.

**8.** Appareil selon la revendication 7, dans lequel, lorsque l'unité de codage code les images multivues à l'aide d'une même valeur que le paramètre de translation transmis, l'unité de codage détermine en outre des informations indiquant qu'une matrice de translation ne change pas et transmet le train de bits d'image multivue.

**9.** Support d'enregistrement lisible par ordinateur sur lequel un programme est enregistré pour exécuter le procédé selon la revendication 1 lorsque ledit programme est exécuté par un ordinateur.

# FIG. 1

REFERENCE LIST 0
(130)

CURRENT B
(110)

REFERENCE LIST 1
(120)

. . .

. . .

$\overrightarrow{MV}$

CURRENT BLOCK

CORRESPONDING BLOCK

$\overrightarrow{MV_{L0}}$

$\overrightarrow{MV_{L1}}$

102

104

$TR_D$

$TR_B$

TIME

# FIG. 2

| 1 | 2 | 3 |
|---|---|---|
| 4 | c | |

# FIG. 3

# FIG. 4

CORRESPONDING POINT

X

PICTURE 1

X'

PICTURE 2

X"

PICTURE 3

# FIG. 5

dv1

dv3

X

PICTURE 1

dv2

X'

PICTURE 2

X"

PICTURE 3

# FIG. 6A

MB1    601

X1

VIEWPOINT 1

MB2    602

X2

VIEWPOINT 2

MB3    603

X3

VIEWPOINT 3

# FIG. 6B

MB2   MB1   611          MB3   MB2   612

X12                          X23

# FIG. 7

VIEWPOINT n−1      VIEWPOINT n      VIEWPOINT n+1

dv1

CORRESPONDING
POINT

dv2

CORRESPONDING POINT

cd1                          cd2

VIEWPOINT

# FIG. 8

VIEWPOINT n−1    VIEWPOINT n    VIEWPOINT n+1

dv3    dv4

CO-LOCATED BLOCK    CURRENT BLOCK

cd3    cd4

VIEWPOINT

# FIG. 9

START

DETERMINE DISPARITY VECTOR
BETWEEN TWO FRAMES
HAVING DIFFERENT VIEWPOINT
FROM CURRENT VIEWPOINT — S910

CALCULATE DISPARITY VECTOR OF
CURRENT VIEWPOINT FRAME USING
DETERMINED DISPARITY VECTOR
AND TRANSLATION PARAMETER — S920

END

# FIG. 10

1020
ENCODING UNIT

1010
MULTI-VIEW CAMERA SYSTEM → MULTI-VIEW PICTURE INPUT UNIT →

1021
SPATIAL DIRECT MODE PERFORMING UNIT

→ BIT STREAM

# FIG. 11

1110
INFORMATION CONFIRMING UNIT

BIT STREAM →

1120
DECODING UNIT

1121
SPATIAL DIRECT MODE PERFORMING UNIT

→ DISPLAY

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005185048 A

**Non-patent literature cited in the description**

- **ZHUGANG.** ITU Study Group 16 - Video Coding Experts Groups-ISO/IEC MPEG & ITU-T VCEG. *CE4 Report,* 29 March 2006, vol. XX
- ITU Study Group 16 - VIDEO CODING EXPERTS GROUP -ISO/IEC MPEG & ITU-T VCEG. *Survey of Algorithms used for Multi-view Video Coding (MVC),* 21 January 2005, vol. XX
- **YUNG-LYUL LEE et al.** ITU Study Group 16 - VIDEO CODING EXPERTS GROUP -ISO/IEC MPEG & ITU-T VCEG. *Multi-view video coding using 2D direct mode,* 13 October 2004, vol. XX
- **YUNG-LYUL LEE et al.** ITU Study Group 16, VIDEO CODING EXPERTS GROUP -ISO/IEC MPEG & ITU-T VCEG. *Multi-view video coding using illumination change-adaptive motion estimation/motion compensation and 2D direct mode,* 12 January 2005, vol. XX